## Europäisches Patentamt

### European Patent Office

### Office européen des brevets

(11) Veröffentlichungsnummer: **0 101 014**
**B1**

(12) **EUROPÄISCHE PATENTSCHRIFT**

(45) Veröffentlichungstag der Patentschrift:
13.11.85

(51) Int. Cl.⁴: **G 03 B 15/05**

(21) Anmeldenummer: **83107652.6**

(22) Anmeldetag: **03.08.83**

(54) **Elektronisches Blitzgerät.**

(30) Priorität: **05.08.82 DE 3229272**

(43) Veröffentlichungstag der Anmeldung:
**22.02.84 Patentblatt 84/8**

(45) Bekanntmachung des Hinweises auf die Patenterteilung:
**13.11.85 Patentblatt 85/46**

(84) Benannte Vertragsstaaten:
**DE FR GB IT**

(56) Entgegenhaltungen:
**DE - A - 2 347 287**
**GB - A - 2 026 720**
**GB - A - 2 081 924**

(73) Patentinhaber: **Patent-Treuhand-Gesellschaft für elektrische Glühlampen mbH, Hellabrunner Strasse 1, D-8000 München 90 (DE)**

(72) Erfinder: **Krieg, Rudolf, Bozener Strasse 1, D-8000 München (DE)**

BUNDESDRUCKEREI BERLIN

## Beschreibung

Die vorliegende Erfindung betrifft ein elektronisches Blitzgerät mit einer in normaler Gebrauchslage horizontal liegenden Blitzröhre in einem langgestreckten, im wesentlichen gleichförmigen, wannenförmigen Reflektor sowie mit einer Einrichtung zum einstellbaren Umlenken der abgegebenen Lichtstrahlen für eine teilweise indirekte Beleuchtung. Der Reflektor ist abschnittsweise aufeinanderfolgend in zumindest drei Teilreflektoren unterteilt, von denen zumindest ein Teilreflektor direkt auf das Objekt abstrahlt und zumindest zwei Teilreflektoren um die Blitzröhre aus der direkten Ausstrahlrichtung nach oben wegschwenkbar sind für die indirekte Beleuchtung. Mit »normaler Gebrauchslage« ist eine Gerätbenutzung für Aufnahmen im Querformat gemeint. Ein derartiges Blitzgerät beschreibt beispielsweise die DE-B-2 740 487.

Es ist bspw. aus der DE-A-2 347 287 bekannt, durch Veränderung der Lagezuordnung von Lampe und Reflektor den Abstrahlwinkel eines Reflektors zur Anpassung an Objektive zu verändern. Aus der GB-A-2 026 720 ist außerdem die Verwendung eines Reflektors bekannt, dessen Krümmung einer modifizierten Parabel der Form

$$y^2 = ax - bx^2$$

folgt.

Ist die angestrebte Änderung des Abstrahlwinkels des Reflektors nur geringfügig, ist es hinreichend, lediglich die Möglichkeit der Veränderung der Lagezuordnung von Lampe und Reflektor vorzusehen. Größeren Änderungen des Abstrahlwinkels ist zusätzlich durch Neugestalten der Krümmung der Reflexionsfläche des Reflektors Rechnung zu tragen, weil sonst die notwendige gleichmäßige Ausleuchtung der Nutzfläche nicht beibehalten werden kann.

Aufgabe der vorliegenden Erfindung ist es, das einleitend beschriebene elektronische Blitzgerät derart weiterzubilden, daß mit ihm Lichtbüschel, angepaßt an Objektive mit Brennweiten von 24 mm bis 100 mm erzeugt werden können.

Erfindungsgemäß besteht die Lösung dieser Aufgabe darin, daß die Krümmung der Reflexionsfläche der Teilreflektoren in einem von den Kurven

A: $y^2 = 19{,}4x - 0{,}3593x^2$   und

B: $y^2 = 16x - 0{,}2666x^2$

begrenzten Bereich verläuft und die Blitzröhre um maximal 1,5 mm parallel zur optischen Achse des Reflektors verschiebbar ist.

Weitere Einzelheiten ergeben sich aus der folgenden Beschreibung mit Zeichnungen. Von den Figuren zeigt

Fig. 1 eine schematische perspektivische Darstellung des elektronischen Blitzgerätes

Fig. 2 den Bereich in kartesischer Koordinierung, in dem die Krümmung der Reflexionsfläche der Teilreflektoren zu verlaufen hat sowie den bevorzugten Krümmungsverlauf.

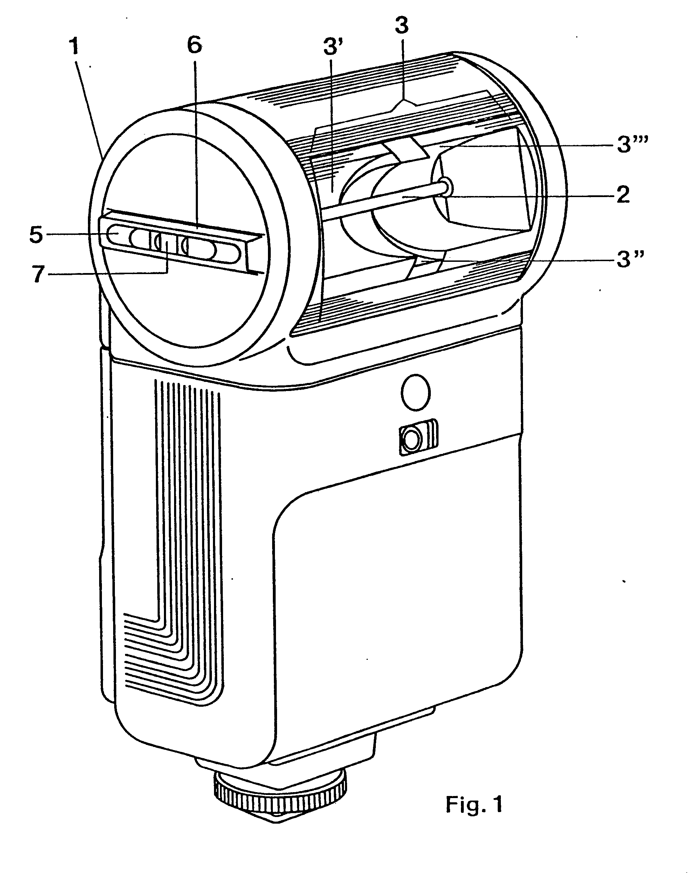

In einem zylinderförmigen Gehäuseabschnitt 1 liegt eine Blitzröhre 2 in einem Reflektor 3, der aus abschnittsweise aufeinanderfolgend zugeordneten Teilreflektoren 3', 3'', 3''' aufgebaut ist (Fig. 1). Die Teilreflektoren sind um die Blitzröhre 2 schwenkbar. Ein entsprechender Schwenkmechanismus und eine Handhabe 6 zum Verschwenken der beiden Teilreflektoren 3', 3''' bzw. aller drei Teilreflektoren 3', 3'', 3''' ist vorgesehen. Es kann je nach Stellung der Teilreflektoren allein direkte, indirekte oder gleichzeitig direkte und indirekte Beleuchtung erzeugt werden.

Die Blitzröhre 2 ist parallel zur optischen Achse des Reflektors 3 verschiebbar. In einer Nut 5 der Handhabe 6 zum Schwenken der Teilreflektoren ist ein Schieber 7 zum Verschieben der Blitzröhre 2 in die gewünschte Stellung gegenüber dem Reflektor 3 vorgesehen. Es lassen sich Lichtbüschel, angepaßt an Objektive mit Brennweiten von 24 mm bis 100 mm erzeugen. Die Blitzröhre kann um maximal 1,5 mm bewegt werden.

Um die gewünschte Lichtverteilung zu erhalten, ist die Krümmung der Reflexionsfläche derart gewählt, daß sie in einem Bereich R kartesischer Koordinierung verläuft, den die Kurven

A: $y^2 = 19{,}4x - 0{,}3593x^2$   und

B: $y^2 = 16x - 0{,}2666x^2$

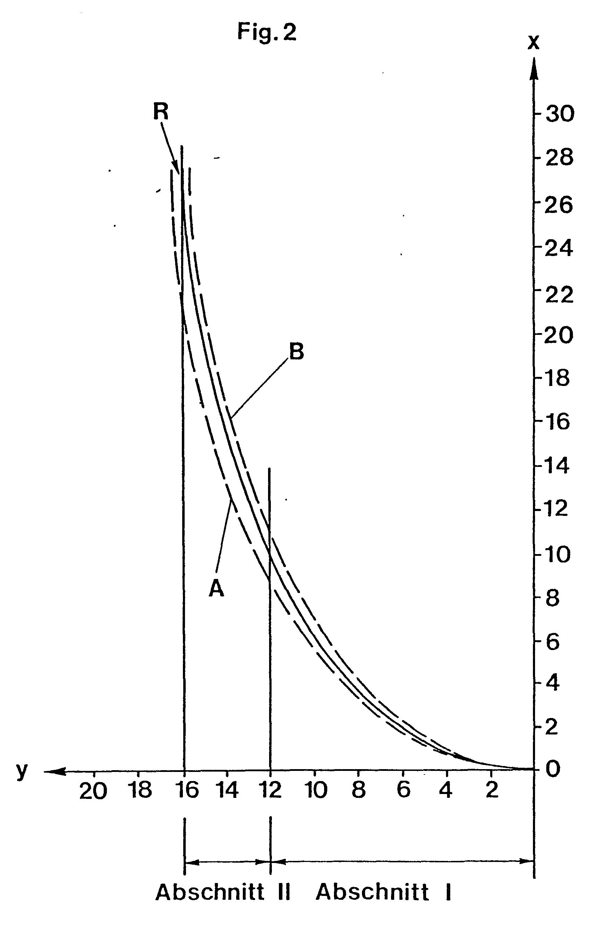

begrenzen (Fig. 2).

Bevorzugt setzt sich der Krümmungsverlauf der Reflexionsfläche der Teilreflektoren 3', 3'', 3''' aus zwei in diesem Bereich R liegenden aufeinanderfolgenden Kurvenabschnitten I, II zusammen (ausgezogene Kurve), wobei

Abschnitt I mit $0 < y < 12$ der Gleichung

$$y^2 = 18x - 0,36x^2 \quad \text{und}$$

Abschnitt II mit $12 < y < 15,9$ der Gleichung

$$y^2 = 17x - 0,2833x^2$$

gehorcht.

## Patentansprüche

1. Elektronisches Blitzgerät mit einer in normaler Gebrauchslage horizontal liegenden Blitzröhre in einem langgestreckten, im wesentlichen gleichförmigen, wannenförmigen Reflektor sowie mit einer Einrichtung zum einstellbaren Umlenken der abgegebenen Lichtstrahlen für eine teilweise indirekte Beleuchtung, wobei der Reflektor abschnittsweise aufeinanderfolgend in zumindest drei Teilreflektoren unterteilt ist, von denen zumindest ein Teilreflektor direkt auf das Objekt abstrahlt und zumindest zwei Teilreflektoren um die Blitzröhre aus der direkten Ausstrahlrichtung nach oben wegschwenkbar sind zur indirekten Beleuchtung, dadurch gekennzeichnet, daß die Krümmung der Reflexionsfläche der Teilreflektoren (3', 3'', 3''') in einem von den Kurven

A: $\quad y^2 = 19,4x - 0,3593x^2 \quad \text{und}$

B: $\quad y^2 = 16x - 0,2666x^2$

begrenzten Bereich (R) verläuft und die Blitzröhre (2) um maximal 1,5 mm parallel zur optischen Achse des Reflektors (3) verschiebbar ist.

2. Elektronisches Blitzgerät nach Anspruch 1, dadurch gekennzeichnet, daß sich der Krümmungsverlauf der Reflexionsfläche aus zwei im Bereich (R) liegenden, aufeinanderfolgenden Kurvenabschnitten (I, II) zusammensetzt, wobei

Abschnitt I mit $0 < y < 12$ der Gleichung

$$y^2 = 18x - 0,36x^2 \quad \text{und}$$

Abschnitt II mit $12 < y < 15,9$ der Gleichung

$$y^2 = 17x - 0,2833x^2$$

gehorcht.

## Claims

1. An electronic flash apparatus having a flashtube that is arranged in a horizontal position as the normal position of use, the flashtube being disposed in an elongate, substantially uniform, trough-shaped reflector and comprising a device for adjustable deflection of the emitted light rays for a partly indirect illumination, whereby the reflector is divided in at least three successive reflector parts of which at least one reflector part emits radiation directly upon the object and at least two reflector parts are pivotable about the flashtube so as to emit light in an upward direction and away from the main direction of emission for indirect lighting, characterized in that the curvatures of the reflective surfaces of the reflector parts (3', 3'', 3''') lie within a range (R) defined by the curves

A: $\quad y^2 = 19,4x - 0,3593x^2 \quad \text{and}$

B: $\quad y^2 = 16x - 0,2666x^2$

and the flashtube (2) may be displaced by a maximum of 1.5 mm parallel to the optical axis of the reflector (3).

2. An electronic flash apparatus as claimed in claim 1, characterized in that the curvature trend of the reflective area is composed of two successive curve segments (I, II) lying within the range (R), wherein section I with $0 < y < 12$ satisfies the equation

$$y^2 = 18x - 0.36x^2 \quad \text{and}$$

section II with $12 < y < 15.9$ satisfies the equation

$$y^2 = 17x - 0.2833x^2.$$

**Revendications**

1. Appareil à flash électronique, comprenant un tube à éclairs situé, en position d'utilisation normale, horizontalement dans un réflecteur allongé, en forme de cuvette et de configuration sensiblement uniforme, ainsi qu'un dispositif en vue de la déviation ajustable des rayons lumineux délivrés pour un éclairage partiellement indirect, le réflecteur étant scindé par zones en au moins trois réflecteurs partiels qui se succèdent mutuellement, parmi lesquels au moins un réflecteur partiel diffuse directement sur l'objet et au moins deux réflecteurs partiels peuvent, en vue de l'éclairage indirect, pivoter à l'écart vers le haut autour du tube à éclairs, à partir de la direction de diffusion directe, caractérisé par le fait que la courbure de la surface de réflexion des réflecteurs partiels (3', 3'', 3''') se situe dans une plage (R) délimitée par les courbes

A: $\quad y^2 = 19,4x - 0,3593x^2$

B: $\quad y^2 = 16x - 0,2666x^2,$

et le tube à éclairs (2) peut coulisser au maximum de 1,5 mm parallèlement à l'axe optique du réflecteur (3).

2. Appareil à flash électronique selon la revendication 1, caractérisé par le fait que l'allure de la courbure de la surface de réflexion se compose de deux zones curvilignes (I, II) se succédant das la plage (R), zones parmi lesquelles la zone I, dans laquelle $0 < y < 12$, répond à l'équation

$$y^2 = 18x - 0,36x^2 \quad \text{et}$$

la zone II, dans laquelle $12 < y < 15,9$ obéit à équation

$$y^2 = 17x - 0,2833x^2.$$

Fig. 1

Fig. 2